(19) Europäisches Patentamt / European Patent Office / Office européen des brevets

(11) **EP 4 451 211 B1**

(12) **EUROPEAN PATENT SPECIFICATION**

(45) Date of publication and mention
of the grant of the patent:
**24.12.2025 Bulletin 2025/52**

(21) Application number: **24169173.2**

(22) Date of filing: **09.04.2024**

(51) International Patent Classification (IPC):
*G06T 7/246* *(2017.01)*

(52) Cooperative Patent Classification (CPC):
**G06T 7/246;** G06T 2207/10016; G06T 2207/30241

(54) **TRACKING OBJECTS IN VIDEO CLIPS**

TRACKING VON OBJEKTEN IN VIDEOCLIPS

TRACKING D'OBJETS DANS LES COUPES VIDÉO

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.04.2023 CN 202310402076**

(43) Date of publication of application:
**23.10.2024 Bulletin 2024/43**

(73) Proprietor: **FUJITSU LIMITED
Kawasaki-shi, Kanagawa 211-8588 (JP)**

(72) Inventors:
• **WANG, Mengjiao
Beijing, 100027 (CN)**

• **LIU, Rujie
Beijing, 100027 (CN)**

(74) Representative: **Hoffmann Eitle
Patent- und Rechtsanwälte PartmbB
Arabellastraße 30
81925 München (DE)**

(56) References cited:
• **YANG FAN ET AL: "ReMOT: A model-agnostic refinement for multiple object tracking", IMAGE AND VISION COMPUTING, vol. 106, 1 February 2021 (2021-02-01), GUILDFORD, GB, pages 104091, XP093171685, ISSN: 0262-8856, DOI: 10.1016/j.imavis.2020.104091**

EP 4 451 211 B1

## Description

### FIELD

The present disclosure relates to the field of information processing, and in particular to an information processing device, an information processing method and a computer readable storage medium.

### BACKGROUND

Tracking for objects, such as humans, animals, and movable objects (such as vehicles) may be widely applied. For example, the tracking may be applied in visual navigation, safety monitoring, intelligent transportation, and the like. For example, it is desired to provide an improved technology for tracking objects.
A scientific publication that investigates on this problem is

YANG FAN ET AL: "ReMOT: A model-agnostic refinement for multiple object tracking", IMAGE AND VISION COMPUTING, vol. 106, 1 February 2021 (2021-02-01), page 104091, GUILDFORD, GB, ISSN: 0262-8856, DOI: 10.1016/ j.imavis.2020.104091
In this work, a Refining MOT Framework (ReMOT) is proposed, which first splits imperfect tracklets and then merges the split tracklets with appearance features improved by self-supervised learning. Experiments demonstrate that ReMOT can make significant improvements to state-of-the-art MOT results as powerful post-processing. Furthermore, ReMOT has the potential of being used to assist semi-automatic MOT data annotation and partially release humans from the tedious work.

### SUMMARY

A brief summary of the present disclosure is given below to provide basic understanding on some aspects of the present disclosure. However, it should be understood that the summary is not an exhaustive summary of the present disclosure. The summary is not intended to define a key part or important part of the present disclosure, or to limit the scope of the present disclosure. The purpose is only to provide some concepts in a simplified form as a preface of subsequent detailed descriptions.

According to the present disclosure, an improved information processing device, an improved information processing method, and an improved computer readable storage medium are provided for tracking an object.

According to an aspect of the present disclosure, an information processing device is provided. The information processing device includes a similarity calculating unit, a splitting point determining unit, a splitting unit, and a merging unit. The similarity calculating unit is configured to calculate, for each tracklet of multiple tracklets, a similarity set of each frame of a specific frame set included in the tracklet, where the similarity set includes a similarity between the frame and a frame in a first predetermined time period immediately before the frame and a similarity between the frame and a frame in a second predetermined time period immediately after the frame. The splitting point determining unit is configured to determine, for each tracklet of the multiple tracklets, a splitting point of the tracklet from the specific frame set based on the similarity set calculated by the similarity calculating unit, where the splitting point indicates a change of an object involved in the tracklet. The splitting unit is configured to split a corresponding tracklet into multiple sub-segments by using the splitting point determined by the splitting point determining unit. The merging unit is configured to merge sub-segments which involve a same object and do not overlap temporally among sub-segments to be merged, to obtain a merged segment, where the sub-segments to be merged include the multiple sub-segments obtained by the splitting unit. The information processing device is characterized in that, the splitting point determining unit determines a frame as a splitting point of a tracklet including the frame in a case that the frame satisfies at least one of a first condition, a second condition, a third condition and a fourth condition. The first condition is that, a difference between a KL distance for the frame and a KL distance for the previous frame is greater than or equal to a first predetermined threshold, wherein a KL distance for a frame is a KL distance between a first subset and a second subset of the similarity set of the frame, the first subset corresponds to the similarity between the frame and the frame in the first predetermined time period immediately before the frame, and the second subset corresponds to the similarity between the frame and the frame in the second predetermined time period immediately after the frame. The second condition is that, a difference between a ratio of slopes of the first subset and the second subset of the frame and a ratio of slopes of the first subset and the second subset of the previous frame is greater than or equal to a second predetermined threshold. The third condition is that, a value obtained by a difference between an average of the first subset of the previous frame and an average of the second subset of the previous frame minus a difference between an average of the first subset of the frame and an average of the second subset of the frame is greater than or equal to a third predetermined threshold. The fourth condition is that, a curve corresponding to the average of the first subset drops, a curve corresponding to the average of the second subset rises, and the difference between the average of the first subset and the average of the second subset is less than or equal to a fourth predetermined threshold.

According to another aspect of the present disclosure, an information processing method is provided. The information processing method includes: calculating, for each of multiple tracklets, a similarity set of each frame of a specific frame set included in the tracklet, where the similarity set includes a similarity between the frame and a frame in a first predetermined time period immediately before the frame and a similarity between the frame and a frame in a second predetermined time period immediately after the frame; determining, for each of the multiple tracklets, a splitting point of the tracklet from the specific frame set based on the similarity set, where the splitting point indicates a change of an object involved in the tracklet; splitting a corresponding tracklet into multiple sub-segments by using the determined splitting point; and merging sub-segments which involve a same object and do not overlap temporally among sub-segments to be merged, to obtain a merged segment, where the segments to be merged include the multiple sub-segments. The information processing method is characterized in that, a frame is determined as a splitting point of a tracklet including the frame in a case that the frame satisfies at least one of a first condition, a second condition, a third condition and a fourth condition. The first condition is that, a difference between a KL distance for the frame and a KL distance for the previous frame is greater than or equal to a first predetermined threshold, wherein a KL distance for a frame is a KL distance between a first subset and a second subset of the similarity set of the frame, the first subset corresponds to the similarity between the frame and the frame in the first predetermined time period immediately before the frame, and the second subset corresponds to the similarity between the frame and the frame in the second predetermined time period immediately after the frame. The second condition is that, a difference between a a ratio of slopes of the first subset and the second subset of the frame and a ratio of slopes of the first subset and the second subset of the previous frame is greater than or equal to a second predetermined threshold. The third condition is that, a value obtained by a difference between an average of the first subset of the previous frame and an average of the second subset of the previous frame minus a difference between an average of the first subset of the frame and an average of the second subset of the frame is greater than or equal to a third predetermined threshold. The fourth condition is that, a curve corresponding to the average of the first subset drops, a curve corresponding to the average of the second subset rises, and the difference between the average of the first subset and the average of the second subset is less than or equal to a fourth predetermined threshold.

According to another aspect of the present disclosure, a computer-readable storage medium on which computer program code for implementing the method according to the present disclosure is recorded is further provided.

Other aspects of embodiments of the present disclosure are given in the following specification, in which preferred embodiments for fully disclosing the present disclosure are described in detail without limitation.

## BRIEF DESCRIPTION OF THE DRAWINGS

The present disclosure may be better understood by referring to the following detailed description given in conjunction with the accompanying drawings in which same or similar reference numerals are used throughout the drawings to refer to the same or like parts. The accompanying drawings, together with the following detailed description, are included in this specification and form a part of this specification, and are used to further illustrate preferred embodiments of the present disclosure and to explain the principles and advantages of the present disclosure. In the drawings:

Figure 1 is a block diagram showing a function configuration example of an information processing device according to an embodiment of the present disclosure;
Figures 2(a) to 2(d) each shows a curve of an exemplary difference between a first subset and a second subset;
Figures 3(a) to 3(d) each shows a curve of an exemplary trend of a similarity curve;
Figure 4 is a schematic diagram showing a comparison between a technology according to the present disclosure and the conventional technology;
Figure 5 is a flowchart showing an exemplary flow of an information processing method according to an embodiment of the present disclosure;
Figure 6 is a schematic diagram showing three exemplary tracklets extracted from a real-time captured video clip;
Figure 7 is a schematic diagram showing exemplary tracklets obtained by processing the tracklets shown in Figure 6; and
Figure 8 is a block diagram showing an exemplary structure of a personal computer applicable to the embodiments of the present disclosure.

## DETAILED DESCRIPTION

Exemplary embodiments of the present disclosure are described below in conjunction with the drawings. For conciseness and clarity, not all features of an actual embodiment are described in this specification. However, it should be understood that numerous embodiment-specific decisions, for example, in accord with constraining conditions related to system and business, should be made when developing any of such actual embodiments, so as to achieve specific goals of a developer. These constraining conditions may vary with embodiments. Furthermore, it should be understood that although development work may be complicated and time-consuming, such development work is only a routine task for those skilled in the art benefiting from the present disclosure.

Here, it should also be noted that, in order to avoid blurring the present disclosure due to unnecessary details, only device structures and/or processing steps closely related to the solution according to the present disclosure are shown in the drawings, and other details not closely related to the present disclosure are omitted.

The embodiments according to the present disclosure are described in detail below in conjunction with the drawings.

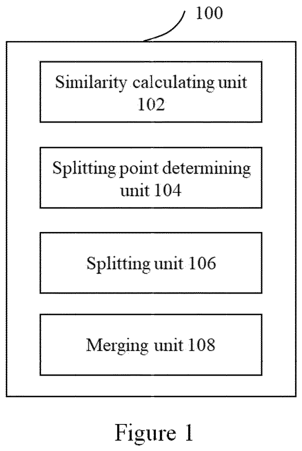

Figure 1 is a block diagram showing a function configuration example of an information processing device 100 according to an embodiment of the present disclosure. As shown in Figure 1, the information processing device 100 according to an embodiment of the present disclosure may include a similarity calculating unit 102, a splitting point determining unit 104, a splitting unit 106 and a merging unit 108.

The similarity calculating unit 102 is configured to calculate, for each tracklet of multiple tracklets, a similarity set of each frame of a predetermined frame set included in the tracklet. For each frame, the similarity set includes a similarity between the frame and a frame (which may be called as a "previous frame") in a first predetermined time period immediately before the frame and a similarity between the frame and a frame (which may be called as a "subsequent frame") in a second predetermined time period immediately after the frame. For example, multiple tracklets may be extracted from a video clip using a conventional tracking method (such as Bytetrack, referring to *ByteTrack: Multi-Object Tracking by Associating Every Detection Box*). In some examples, the video clip may be a real-time captured video clip, but not limited thereto. For example, in some examples, the video clip may be a non- real-time captured video clip, such as a pre-captured video clip.

For example, the first predetermined time period and the second predetermined time period may be determined according to actual requirements. In some examples, the first predetermined time period may be same as the second predetermined time period. In some examples, the first predetermined time period may be different from the second predetermined time period.

For example, for any two frames, a similarity between features of the two frames may be calculated as a similarity of the two frames. For example, a cosine similarity between a feature f1 of a frame and a feature f2 of another frame may calculated according to the following equation (1) as a similarity between the features f1 and f2:

$$\mathrm{Similarity} = (f1, f2)/|f1|/|f2| \qquad (1)$$

Of course, those skilled in the art may calculate the similarity between features in other ways.

For example, a feature of a frame may be extracted by using person-reidentification-retail-0277(*person-reidentification-retail-0277-OpenVINO™ Toolkit*).

For example, for a current frame t, a sliding window (t-M~t+N) may be used to select frames for similarity analysis. For example, a similarity between the current frame t and a previous frame (t-M~t-1) in the first predetermined time period immediately before the current frame and a similarity between the current frame t and a subsequent frame (t+1~t+N) in the second predetermined time period immediately after the current frame may be calculated as a similarity set of the current frame t, where M and N are natural numbers.

It should be noted that in the present disclosure, a "current frame" represents a frame for which a similarity set is calculated, rather than a frame captured at a current timing. For example, in a case that a tracklet is extracted from a video captured in real time, a timing corresponding to the current frame may be earlier than a current timing and may have a time interval equal to the second predetermined time period with the current timing. In addition, t represents a frame number of the current frame. For example, a smaller frame number t indicates that a corresponding frame is captured earlier.

The splitting point determining unit 104 is configured to determine, for each tracklet of the multiple tracklets, a splitting point of the tracklet from the predetermined frame set based on the similarity set calculated by the similarity calculating unit 102. For each tracklet, the splitting point indicates a change (which may also be called as a "ID switch") of an object involved in the tracklet, that is, the object changes from an object to another object, for example, the object changes from a person to another person, from an animal to another animal, or from a movable object (such as a vehicle) to another movable object (such as another vehicle).

In the present disclosure, "an object involved in the tracklet" represents an object tracked based on the tracklet, and may be called as a "target object".

The splitting unit 106 is configured to split a corresponding tracklet into multiple sub-segments by using the splitting point determined by the splitting point determining unit 104. For example, temporally adjacent sub-segments among multiple sub-segments split from a same tracklet may involve different objects.

The merging unit 108 is configured to merge sub-segments which involve a same object and do not overlap temporally among sub-segments to be merged, to obtain a merged segment. The sub-segments to be merged include the multiple sub-segments obtained by the splitting unit 106.

Video-based object tracking may be widely applied. However, ID switch may occur in tracklets extracted from video clips with the tracking method such as Bytetrack, that is, different objects are assigned to a same tracklet. Therefore, it is required to perform post-processing to reduce ID switch in the tracklets generated with the tracking method.

As described above, the information processing device 100 according to the embodiments of the present disclosure determines a splitting point of a tracklet, splits the tracklet based on the splitting point, and merges split sub-segments to obtain a merged segment, thereby improving the purity of the merged segment. The purity may indicate a time length of correct ID tracking. A greater purity indicates a longer time length of correct ID tracking.

Furthermore, the information processing device 100 according to the embodiments of the present disclosure determines, for each tracklet, a splitting point is determined based on similarities between a frame and frames having a time interval less than a predetermined time period with the frame(that is, a frame in a first predetermined time period immediately before the frame and a frame in a second predetermined time period immediately after the frame). Compared to the technology in which a splitting point is determined based on all frames included in a tracklet with a clustering method, processing speed can be improved with the information processing device 100. In addition, real-time performance may be improved by setting the second predetermined time period, for example, setting the second predetermined time period to several seconds (such as 1 second to 2 seconds). Compared to the technology in which only a frame in a predetermined time period immediately before each frame is used to determine the splitting point, an accuracy of the determined splitting point can be improved with the information processing device 100. That is, a balance between real-time performance and high accuracy can be achieved with the information processing device 100.

Based on experiments and analysis, it is found that for a frame as a splitting point, there is a certain difference between the similarity (which may be called as a "first subset" in the following) between the frame and respective frames in the first predetermined time period immediately before the frame and the similarity (which may be called as a "second subset" in the following) between the frame and respective frames in the second predetermined time period immediately after the frame. Therefore, the splitting point may be determined based on the difference between the first subset and the second subset. For example, the difference between the first subset and the second subset may be determined based on a KL distance (Kullback-Leibler Divergence) between the first subset and the second subset, a ratio of slopes of the first subset and the second subset (that is, a ratio R1/R2 between a slope R1 of the first subset and a slope R2 of the second subset), and/or a difference between an average of the first subset and an average of the second subset, and the splitting point is determined based on the difference.

For example, a KL distance KL(S1∥S2) between a first subset S1 and a second subset S2 of the current frame t may be calculated according to the following equation (2):

$$KL(S1\|S2)=sum(S1(i)*log(S1(i)/S2(i))) \qquad (2)$$

In equation (2), S1(i) represents an i-th element in the first subset S1, that is, a similarity between a (t-M-1+i)th frame and the current frame t; S2(i) represents an i-th element in the second subset S2, that is, a similarity between a (t+i)th frame and the current frame t; and i ranges from 1 to M (in a case that M≤N) or ranges from 1 to N (in a case that M>N).

For example, a slope R1 of the first subset S1 of the current frame t may be calculated according to the following equation (3):

$$R1=(S1(M)–S1(1))/M \qquad (3)$$

In equation (3), S1(M) represents an M-th element in the first subset S1, that is, a similarity between a (t-1)th frame and the current frame t; and S1(1) represents a first element in the first subset S1, that is, a similarity between a (t-M)th frame and the current frame t.

Similarly, for example, a slope R2 of the second subset S2 of the current frame t may be calculated according to the following equation (4):

$$R2=(S2(1)–S2(N))/N \qquad (4)$$

In equation (4), S2(1) represents a first element in the second subset, that is, a similarity between a (t+1)th frame and the current frame t; and S2(N) represents an N-th element in the second subset, that is, a similarity between a (t+N)th frame and the current frame t.

For example, the splitting point determining unit 104 may determine a frame, satisfying at least one of a first condition to a fourth condition, as a splitting point of a tracklet including the frame.

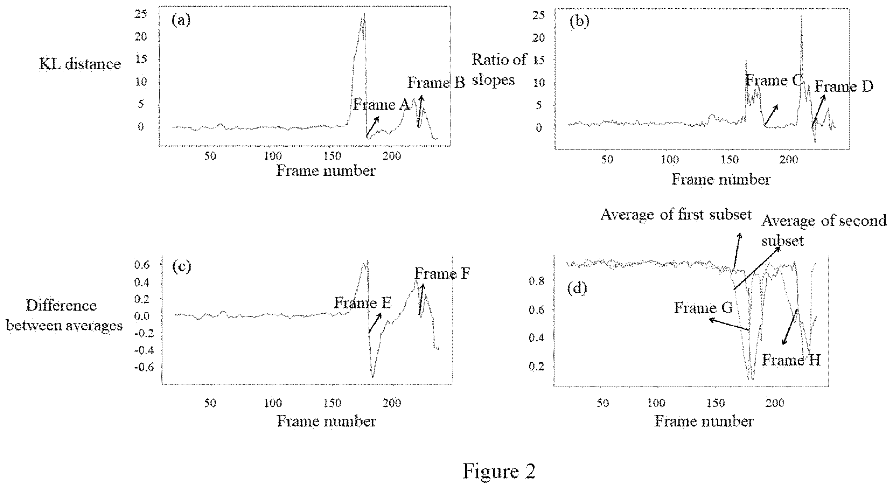

The first condition is that a KL distance between a first subset and a second subset drops significantly, for example, a dropping degree of the KL distance (such as a difference between a KL distance of the frame and a KL distance of a previous frame, that is, the KL distance of the previous frame minus the KL distance of the frame) is greater than or equal to a first predetermined threshold. Figure 2(a) shows an example of a curve drawn based on KL distances between first subsets and second subsets of respective frames. As can be seen from Figure 2(a), a KL distance corresponding to a frame A and a KL distance corresponding to a frame B drop significantly, so that the frames A and B may be determined as splitting points.

The second condition is that a ratio of slopes of the first subset and the second subset drops significantly, for example, a dropping degree of the ratio of slopes (such as a difference between a ratio of slopes of the frame and a ratio of slopes of the previous frame, that is, the ratio of slopes of the previous frame minus the ratio of slopes of the frame) is greater than or equal to a second predetermined threshold. Figure 2(b) shows an example of a curve drawn based on ratios of slopes of first subsets and second subsets of respective frames. As can be seen from Figure 2(b), a ratio of slopes corresponding to a frame C and a ratio of slopes corresponding to a frame D drop significantly, so that the frames C and D may be determined as splitting points.

The third condition is that a difference between an average of the first subset and an average of the second subset (that is, the average of the first subset minus the average of the second subset) drops significantly, for example, a dropping degree (such as, a difference between averages of the previous frame minus a difference between averages of the frame) is greater than or equal to a third predetermined threshold. Figure 2(c) shows an example of a curve drawn based on differences between averages of first subsets and averages of second subsets of respective frames. As can be seen from Figure 2(c), a difference between the averages corresponding to each of a frame E and a frame F drops significantly, so that the frames E and F may be determined as splitting points.

The fourth condition is that the average of the first subset decreases, the average of the second subset increases, and the difference between the average of the first subset and the average of the second subset (that is, |the average of the first subset-the average of the second subset|) is less than or equal to a fourth predetermined threshold. Figure 2(d) shows an example of a curve drawn based on averages of first subsets and averages of second subsets of respective frames. For example, in a case that a curve corresponding to the first subsets drops and a curve corresponding to the second subsets rises in Figure 2(d), a frame corresponding to an intersection point of the curve corresponding to the first subsets and the curve corresponding to the second subsets (or a frame closest to the intersection point in a case that the frame corresponding to the intersection point is not included), such as a frame G and a frame H, may be determined as a splitting point.

For example, the first predetermined threshold to the fourth predetermined threshold may be set according to experience or obtained through a limited number of experiments.

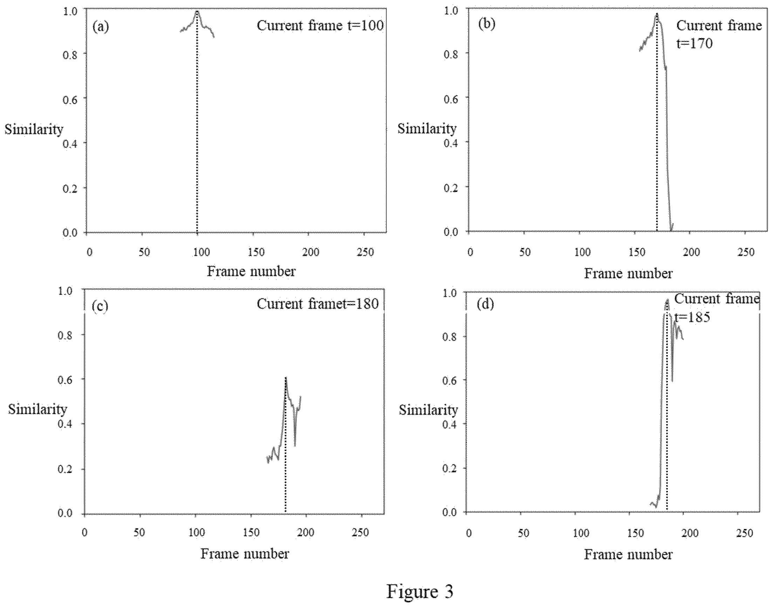

By analyzing trends of similarity curves drawn based on similarity sets calculated by the similarity calculating unit 102, it is found that for different frames, trends of similarity curves are different. Four main trends (1) to (4) of similarity curves exist. For a trend (1), portions of a similarity curve on both sides of the current frame t are similar as shown in Figure 3(a). For a trend (2), a portion of a similarity curve on a right side of the current frame t (that is, a portion of the similarity curve corresponding to subsequent frames t+1~t+N (where N is equal to 15 in the example shown in Figure 3)) drops significantly as shown in Figure 3(b). For a trend (3), after a portion of a similarity curve corresponding to subsequent frames t+1~t+N for a current frame t drops significantly, portions of another similarity curve on both sides of another current frame t become similar, and values of the portions may decrease compared to those in the trend (1), as shown in Figure 3(c). For a trend (4), a portion of a similarity curve on a left side of the current frame t (that is, a portion corresponding to previous frames t-M~t-1 (where M is equal to 15 in the example shown in Figure 3)) increases significantly as shown in Figure 3(d). The trend (1) corresponds to a case that no ID switch occurs in the frames in the sliding window (t-M~t+N). The trend (2) corresponds to a case that an ID switch occurs in a subsequent frame. The trend (3) corresponds to a case that an ID switch occurs or likely to occur in the current frame t. The trend (4) corresponds to a case that an ID switch occurs in a previous frame.

In order to reduce the frequency of detecting the splitting point and further improve the calculation speed, the splitting point determining unit 104 may determine a frame having the trend (2) (such as a frame for which a dropping degree of the second subset is greater than or equal to a fifth predetermined threshold) as a splitting point determination start frame, determine a frame with the trend (4) (such as a frame for which an increasing degree of the first subset is greater than or equal to a sixth predetermined threshold) as a splitting point determination end frame, and determine the splitting point only among frames from the splitting point determination start frame to the splitting point determination end frame (excluding the splitting point determination start frame and the splitting point determination end frame). For example, the splitting point determining unit 104 may mark each frame with one of: an s state (splitting point determination starts), an e state (splitting point determination ends), a p state (possibly a splitting point), and an n state (impossibly a splitting point). For a frame having the trend (2) (for example, a dropping degree of the second subset is larger than or equal to the fifth predetermined threshold), the frame is marked with the s state, and splitting point detection starts. For a frame having the trend (4) (for example, an increasing degree of the first subset is greater than or equal to the sixth predetermined threshold), the frame is marked with the e state, and the splitting point detection ends. For a frame between an s frame and an e frame, the frame is marked with the p state, and splitting point detection is performed on the frame. Other frames are marked with the n state, and splitting point detection is not performed thereon. For example, the fifth predetermined threshold and the sixth predetermined threshold may be set according to experience or obtained through a limited number of experiments.

In a case that a target object is occluded in a short time period and then appears, the similarity curve of the frame may show the trend (2) and/or trend (4), and the frame is easily misidentified as the splitting point determination start frame and/or the splitting point determination end frame. In this case, since the similarity curve corresponding to the subsequent frame may temporarily drop and then immediately increase, and the dropping degree is relatively small, the fifth predetermined threshold and/or the sixth predetermined threshold may be adjusted to prevent the frame from being misidentified as the splitting point determination start frame and/or the splitting point determination end frame.

As an example, the following condition may also be set for the splitting point determination start frame to avoid a frame being misidentified as the splitting point determination start frame: a difference between a first element and a second element in a similarity set of the splitting point determination start frame is greater than or equal to a seventh predetermined threshold. The first element corresponds to a frame before the splitting point determination start frame, and a time interval between the frame and the splitting point determination start frame is less than or equal to a third predetermined time period. The second element corresponds to a frame after the splitting point determination start frame, and a time interval between the frame and the splitting point determination start frame is greater than or equal to a fourth predetermined time period. For example, the seventh predetermined threshold, the third predetermined time period, and the fourth predetermined time period may be set according to experience or obtained through a limited number of experiments. For example, the third predetermined time period may be less than the first predetermined time period, and the fourth predetermined time period may be less than the second predetermined time period.

As an example, for each tracklet, the predetermined frame set may include all the frames included in the tracklet in processing.

As another example, the predetermined frame set may only include frames satisfying a first intersection over union condition that an intersection over union between a bounding box of a target object and a bounding box of another object in the frame is greater than or equal to an eighth predetermined threshold. ID switch in a tracking trajectory is mainly caused by occlusion, and ID switch seldom occurs in frames corresponding to a small intersection over union. Therefore, similarity analysis may be performed only on frames corresponding to intersection over union greater than or equal to the eighth predetermined threshold, thereby further reducing calculation amount and improving processing speed while accurately detecting the splitting point. For example, the eighth predetermined threshold may be 0.5, which is not limited and may be set according to actual requirements.

As an example, the similarity calculating unit 102 may calculate, for each frame of the predetermined frame set, similarities between the frame and all frames in the first predetermined time period immediately before the frame and all frames in the second predetermined time period immediately after the frame as a similarity set of the frame.

As another example, the similarity calculating unit 102 may calculate, for each frame of the predetermined frame set, similarities between the frame and frames among the previous frames and the subsequent frames, which satisfy a second intersection over union condition that an intersection over union between a bounding box of a target object and a bounding box of any other object in the frame is less than or equal to a ninth predetermined threshold, as a similarity set of the frame. The ninth predetermined threshold may be greater than the eighth predetermined threshold. In a case of a great overlapping degree of a target object and another object in a frame, the calculated similarity may not accurately indicate a similarity between the frame and the other frame (such as a frame for which the similarity set is calculated). Therefore, for each frame, the similarities between the frame and the frames among the previous frames and the subsequent frames which satisfy the second intersection over union condition are calculated as the similarity set of the frame, thereby the accuracy of the splitting point determined based on the similarity set may be further improved and the purity of the merged segment may be further improved.

In some examples, the splitting point determining unit 104 may detect the splitting point with assistance of motion information, thereby the accuracy of the determined splitting point may be further improved and the purity of the merged segment may be further improved . For example, the splitting point determining unit 104 may determine the spitting point further based on a difference between a real position and an estimated position of a target object in each frame of the predetermined frame set. For example, each frame in the predetermined frame set satisfies the first intersection over union condition. The estimated position may be obtained based on real positions of the target object in frames in a first time range before the frame and real positions of the target object in frames in a second time range after the frame. For example, the position of the target object may be represented by a position of a center of a bounding box of the target object. Of course, the position of the target object may be represented by a position of a point on the bounding box of the target object according to actual requirements.

For example, it is assumed that the motion of the target object is linear in a short time period. A linear motion may be expressed by a0+a1*x, where a0 and a1 are calculated based on positions of a target object in frames in the first time range before the current frame t (for example, frames in a sliding window (t-M, t-M+i)) and positions of the target object in frames in the second time range after the current frame t (for example, frames in a sliding window (t+N-j, t+N)), by using a least squares regression algorithm. i and j each is a natural number greater than one. For example, i and j may be equal to 2, which is not limited. For example, an estimated position ye of the target object in the current frame may be calculated by using a linear function, that is, ye=a0+a1*t. For example, a distance d between the real position yt and the estimated position ye may be calculated as a difference between the real position yt and the estimated position ye. For example, the distance d may be calculated based on the following equation (5):

$$d = \|ye - yt\| / h \qquad (5)$$

In equation (5), h represents a height of the bounding box of the target object in the current frame. For example, in a case of the difference being greater than or equal to a predetermined value K1 (K1>0), the current frame may be determined as the splitting point.

In some examples, the merging unit 108 may determine whether sub-segments to be merged involve a same object based on a similarity between the sub-segments to be merged. For example, in a case that a similarity between two sub-segments to be merged is greater than or equal to a predetermined value K2 (K2>0), it may be determined that the two sub-segments involve a same object. For example, the merging unit 108 may determine a similarity between the sub-segments to be merged based on a similarity between features of the sub-segments to be merged. For example, for each sub-segment to be merged, the merging unit 108 may calculate an average of features of all frames included in the sub-segment as a feature of the sub-segment.

In some examples, the merging unit 108 may determine the similarity between the sub-segments to be merged based on representative features of the sub-segments to be merged. For example, for any two sub-segments to be merged (a first sub-segment to be merged and a second sub-segment to be merged), a similarity between each of multiple representative features of the first sub-segment to be merged and each of multiple representative features of the second sub-segment to be merged may be calculated, and a similarity having a greatest value among obtained similarities is determined as the similarity between the first sub-segment to be merged and the second sub-segment to be merged.

In a sub-segment to be merged, an appearance of a same object may change significantly. For example, both a front side and a back side of a person may appear in the sub-segment to be merged. The similarity between sub-segments to be merged is determined based on the representative features of the sub-segments to be merged, and it is further determined whether the sub-segments to be merged involve a same object, the purity of the merged segment may be further improved.

As an example, for a sub-segment to be merged, in a case that a similarity between a feature f_curr of a current frame and an average f_prevAvg of features of previous frames is less than or equal to a predetermined value K3 (K3>0), the feature f_curr of the current frame may be determined as a representative feature of the sub-segment. As another example, for a sub-segment to be merged, in a case that a similarity between a feature f_curr of a current frame and an average f_prevAvg of features of previous frames is less than or equal to a predetermined value K3 (K3>0) and a similarity between the feature f_curr of the current frame and a determined representative feature is less than or equal to the predetermined value K3 (K3>0), the feature f_curr of the current frame may be determined as a representative feature of the sub-segment. For example, the predetermined value K3 may be 0.5, which is not limited and may be set according to actual requirements.

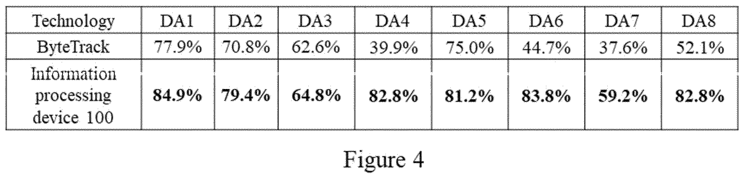

Figure 4 is a schematic diagram showing a comparison between the information processing device 100 according to an embodiment of the present disclosure and the conventional technology ByteTrack. As can be seen from Figure 4, compared to the conventional technology, for different datasets DA1, DA2, DA3, DA4, DA5, DA6, DA7 and DA8, purities (represented by ID F1 Score) of merged tracklets obtained by the information processing device 100 are all improved.

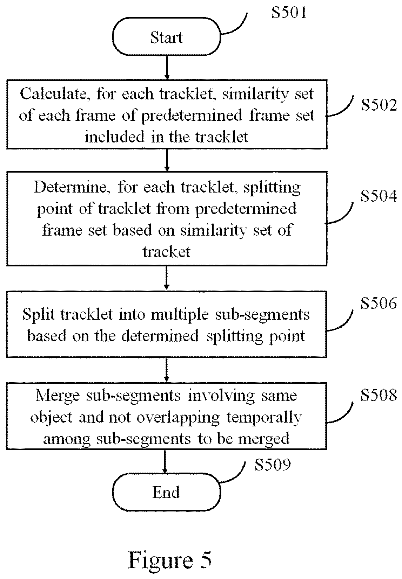

Corresponding to the above embodiments of the information processing device, embodiments of an information processing method 500 are further provided according to the present disclosure. The information processing method 500 is described below with reference to Figures 5 to 7 and in conjunction with a non-restrictive example in which a video clip is captured in real time.

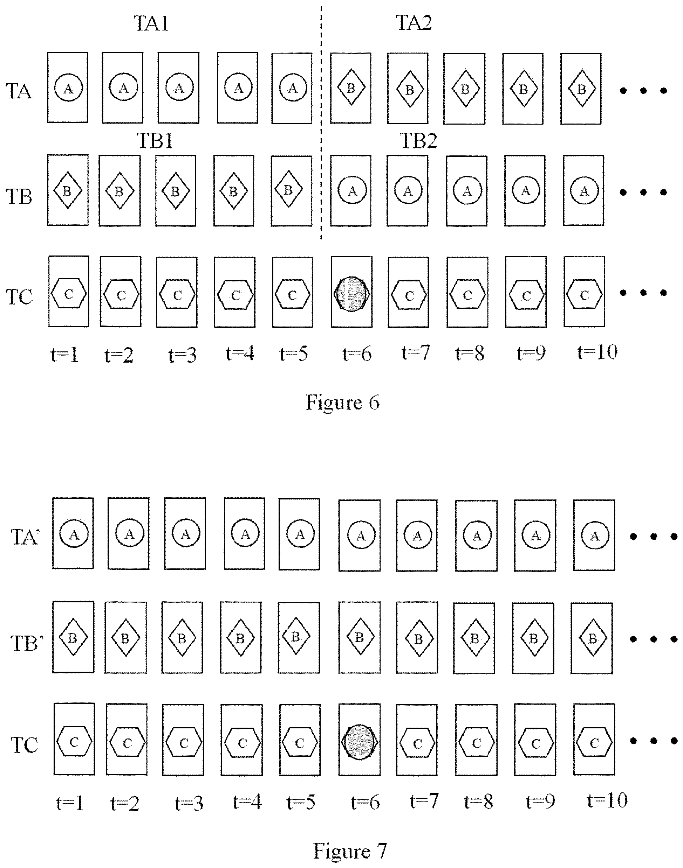

Figure 5 is a flowchart showing an exemplary flow of an information processing method 500 according to an embodiment of the present disclosure. Figure 6 is a schematic diagram showing three exemplary tracklets extracted from an exemplary video clip. Figure 7 is a schematic diagram showing exemplary tracklets obtained processing the tracklets showed in Figure 6.

As shown in Figure 5, an information processing method 500 according to an embodiment of the present disclosure may start at a step S501 and end at a step S509, and may include a similarity calculating step S502, a splitting point determining step S504, a splitting step S506, and a merging step S508.

In the similarity calculating step S502, for each tracklet, such as each of the three tracklets TA, TB and TC shown in Figure 6, a similarity set of each frame of a predetermined frame set included in the tracklet is be calculated. For example, for a current frame t, a similarity between the current frame t and a previous frame (t-M~t-1) in a first predetermined time period immediately before the current frame and a similarity between the current frame t and a subsequent frame (t+1~t+N) in a second predetermined time period immediately after the current frame are calculated as the similarity set of the current frame t. For example, the similarity calculating step S502 may be performed by the similarity calculating unit 102, so this step is briefly described below.

In the splitting point determining step S504, for each tracklet, such as each of the three tracklets TA, TB and TC as shown in Figure 6, a splitting point of the tracklet may be determined from the predetermined frame set based on the similarity set of the tracklet. For example, the splitting point determining step S504 may be performed by the splitting point determining unit 104, so this step is briefly described below.

For example, for the tracklets TA and TB, a frame numbered 6 (that is, t=6) and satisfying a predetermined condition (for example, at least one of the first condition to the fourth condition) may be determined as a splitting point. In addition, for the tracklet TC, although occlusion occurs at t=6, there is no frame satisfying the predetermined condition, so there is no splitting point.

In the splitting step S506, a corresponding tracklet may be split based on the determined splitting point. For example, the tracklet TA is split into two sub-segments TA1 and TA2, and the tracklet TB is split into two sub-segments TB1 and TB2.

For example, a tracklet and/or a sub-segment may be marked with a state. The split sub-segments TA1, TA2, TB1 and TB2 may be marked with an "inactive" state, and the tracklet TC not been split may be marked with an "active" state.

In the merging step S508, sub-segments, that involve a same object and do not overlap temporally among the sub-segments TA1, TA2, TB1 and TB2 marked with the "inactive" state, may be merged. For example, based on the operations described above for the merging unit 108, it may be determined that the sub-segments TA1 and TB2 that do not overlap temporally involve a same object and the sub-segments TB1 and TA2 that do not overlap temporally involve to a same object. As shown in Figure 7, the sub-segments TA1 and TB2 are merged to obtain a merged segment TA', the sub-segments TB1 and TA2 are merged to obtain a merged segment TB', and the merged segments TA 'and TB' are marked with the "active" state.

For example, in a case that a tracklet marked with the "active" state temporarily ends, the temporarily ended tracklet may be marked with the "inactive" state. The segments to be merged may include the temporarily ended tracklet.

Similar to the information processing device 100, the purity of the merged segment can be improved by using the information processing method 500. In addition, with the information processing method 500, an object can be tracked in real time with a small delay.

It should further be noted that the method embodiments herein correspond to the above device embodiments. Therefore, for details not described in the method embodiments, one may refer to corresponding description of the device embodiments, which are not repeated herein.

It should be understood that machine-executable instructions in the storage medium and the program product according to the embodiments of the present disclosure may be further configured to perform the above information processing method. Therefore, content not described in detail here may refer to corresponding parts in the above, and is not repeated herein.

Accordingly, a storage medium for carrying the program product including machine-executable instructions is further included in the present disclosure. The storage medium includes but is not limited to a floppy disk, an optical disk, a magneto-optical disk, a memory card, a memory stick, and the like.

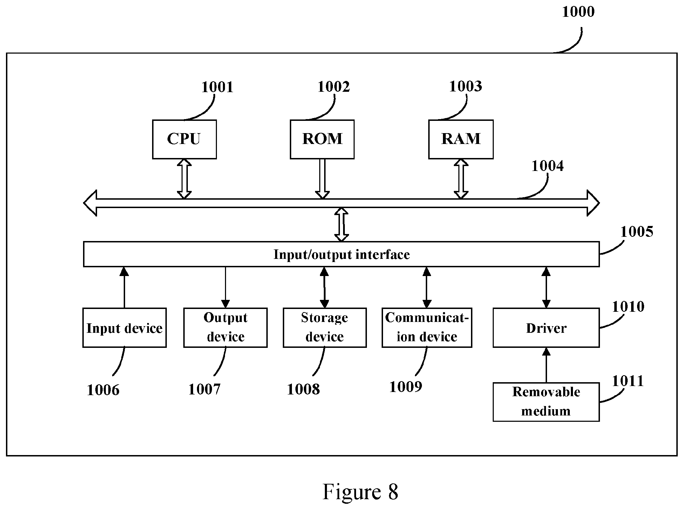

In addition, it should be further noted that the above series of processing and devices may be implemented by software and/or firmware. In a case that the above series of processing and devices are implemented by software and/or firmware, a program constituting the software is installed from a storage medium or network to a computer with a dedicated hardware structure, such as a general-purpose personal computer 1000 shown in Figure 8. The computer can perform various functions when being installed with various programs.

In Figure 8, a central processing unit (CPU) 1001 executes various processing according to a program stored in a read-only memory (ROM) 1002 or a program loaded from a storage device 1008 to a random access memory (RAM) 1003. Data required when the CPU 1001 performs various processing is stored in the RAM 1003 as needed.

The CPU 1001, the ROM 1002, and the RAM 1003 are connected to each other via a bus 1004. An input/output interface 1005 is also connected to the bus 1004.

The following components are connected to the input/output interface 1005: an input device 1006 including a keyboard, a mouse and the like; an output device 1007 including a display such as a cathode ray tube (CRT) and a liquid crystal display (LCD), a loudspeaker and the like; a storage device 1008 including a hard disk and the like; and a communication device 1009 including a network interface card such as a LAN card, a modem and the like. The communication device 1009 performs communication processing via a network such as the Internet.

A driver 1010 may be connected to the input/output interface 1005 as needed. A removable medium 1011 such as a magnetic disk, an optical disk, a magneto-optical disk, and a semiconductor memory is mounted on the driver 1010 as needed, so that a computer program read from the removable medium 1011 is installed in the storage device 1008 as needed.

In a case of implementing the above series of processing by software, the program constituting the software is installed from the network such as the Internet or the storage medium such as the removable medium 1011.

Those skilled in the art should understand that the storage medium is not limited to the removable medium 1011 shown in Figure 8 that stores the program and is distributed separately from the apparatus so as to provide the program to the user. Examples of the removable medium 1011 include: a magnetic disk (including a floppy disk (registered trademark)), an optical disk (including a compact disk read-only memory (CD-ROM) and a digital versatile disk (DVD)), a magnetic-optical disk (including a mini disk (MD) (registered trademark)), and a semiconductor memory. Alternatively, the storage medium may be the ROM 1002, a hard disk included in the storage device 1008 or the like. The storage medium has a program stored therein and is distributed to the user together with a device in which the storage medium is included.

For example, multiple functions included in one unit in the above embodiments may be implemented by separate devices. Alternatively, multiple functions implemented by multiple units in the above embodiments may be implemented by separate devices, respectively. In addition, one of the above functions may be implemented by multiple units. Apparently, such configurations are included in the technical scope of the present disclosure.

In this specification, the steps described in the flow chart include not only processing performed chronologically in the described order, but also the processing performed in parallel or individually rather than chronologically.

**Claims**

1. An information processing device (100), comprising:

   a similarity calculating unit (102), configured to calculate, for each tracklet of a plurality of tracklets, a similarity set of each frame of a specific frame set included in the tracklet, wherein the similarity set includes a similarity between the frame and a frame in a first predetermined time period immediately before the frame and a similarity between the frame and a frame in a second predetermined time period immediately after the frame;
   a splitting point determining unit (104), configured to determine, for each tracklet of the plurality of tracklets, a splitting point of the tracklet from the specific frame set based on the similarity set calculated by the similarity calculating unit (102), wherein the splitting point indicates a change of an object involved in the tracklet;
   a splitting unit (106), configured to split a corresponding tracklet into a plurality of sub-segments by using the splitting point determined by the splitting point determining unit; and
   a merging unit (108), configured to merge sub-segments which involve a same object and do not overlap temporally among sub-segments to be merged, to obtain a merged segment, wherein the sub-segments to be merged include the plurality of sub-segments obtained by the splitting unit,
   **characterized in that**,
   the splitting point determining unit (104) determines a frame as a splitting point of a tracklet including the frame in a case that the frame satisfies at least one of a first condition, a second condition, a third condition and a fourth condition,
   the first condition is that, a difference between a KL distance for the frame and a KL distance for the previous frame is greater than or equal to a first predetermined threshold, wherein a KL distance for a frame is a KL distance between a first subset and a second subset of the similarity set of the frame, the first subset corresponds to the similarity between the frame and the frame in the first predetermined time period immediately before the frame, and the second subset corresponds to the similarity between the frame and the frame in the second predetermined time period immediately after the frame,
   the second condition is that, a difference between a ratio of slopes of the first subset and the second subset of the frame and a ratio of slopes of the first subset and the second subset of the previous frame is greater than or equal to a second predetermined threshold,
   the third condition is that, a value obtained by a difference between an average of the first subset of the previous frame and an average of the second subset of the previous frame minus a difference between an average of the first subset of the frame and an average of the second subset of the frame is greater than or equal to a third predetermined threshold, or
   the fourth condition is that, a curve corresponding to the average of the first subset drops, a curve corresponding to the average of the second subset rises, and the difference between the average of the first subset and the average of the second subset is less than or equal to a fourth predetermined threshold.

2. The information processing device (100) according to claim 1, wherein for each tracklet, the splitting point is determined only from a splitting point determination start frame to a splitting point determination end frame in the specific frame set; and
the splitting point determination start frame is a frame for which a dropping degree of the second subset is greater than or equal to a fifth predetermined threshold, and the splitting point determination end frame is a frame for which an increasing degree of the first subset is greater than or equal to a sixth predetermined threshold.

3. The information processing device (100) according to claim 2, wherein the splitting point determination start frame satisfies moreover the condition that a difference between a first element and a second element in a similarity set of the splitting point determination start frame is greater than or equal to a seventh predetermined threshold, wherein the first element corresponds to a frame before the splitting point determination start frame, a time interval between which and the splitting point determination start frame being less than or equal to a third predetermined time period, and the second element corresponds to a frame after the splitting point determination start frame, a time interval between which and the splitting point determination start frame being greater than or equal to a fourth predetermined time period.

4. The information processing device (100) according to claim 2, wherein for each tracklet, the specific frame set includes only frames that satisfy a condition that a first intersection over union between a bounding box of a target object and a bounding box of another object in each frame of the specific frame set is greater than or equal to an eighth predetermined threshold.

5. The information processing device (100) according to claim 4, wherein the similarity calculating unit (102) is configured to: for each frame of the specific frame set, calculate, as the similarity set, only similarities between the frame and a plurality of frames in the first predetermined time period immediately before the frame and in the second predetermined time period immediately after the frame, which satisfy a condition that a second intersection over union between a bounding box of a target object and a bounding box of any other object in each of the plurality of frames is less than or equal to a ninth predetermined threshold, and
wherein the ninth predetermined threshold is greater than the eighth predetermined threshold.

6. The information processing device (100) according to claim 5, wherein the splitting point determining unit (104) is further configured to determine the splitting point further based on a difference between a real position and an estimated position of a target object in each frame of the specific frame set, and
wherein the estimated position is obtained based on real positions of the target object in frames in a first time range before the frame and real positions of the target object in frames in a second time range after the frame.

7. The information processing device (100) according to any one of claims 1 to 6, wherein the merging unit (108) is configured to determine whether sub-segments to be merged involve a same object based on a similarity between representative features of the sub-segments to be merged, and
wherein a representative feature of each sub-segment to be merged is a feature of a frame in the sub-segment to be merged, a similarity between the feature of the frame and an average of features of previous frames in the sub-segment to be merged being less than or equal to a predetermined value.

8. A computer-implemented information processing method (500), comprising:

calculating (S502), for each of a plurality of tracklets, a similarity set of each frame of a specific frame set included in the tracklet, wherein the similarity set includes a similarity between the frame and a frame in a first predetermined time period immediately before the frame and a similarity between the frame and a frame in a second predetermined time period immediately after the frame;
determining (S504), for each of the plurality of tracklets, a splitting point of the tracklet from the specific frame set based on the similarity set, wherein the splitting point indicates a change of an object involved in the tracklet;
splitting (S506) a corresponding tracklet into a plurality of sub-segments by using the determined splitting point; and
merging (S508) sub-segments which involve a same object and do not overlap temporally among sub-segments to be merged, to obtain a merged segment, wherein the sub-segments to be merged include the plurality of sub-segments,
**characterized in that**,
a frame is determined as a splitting point of a tracklet including the frame in a case that the frame satisfies at least one of a first condition, a second condition, a third condition and a fourth condition,

the first condition is that, a difference between a KL distance for the frame and a KL distance for the previous frame is greater than or equal to a first predetermined threshold, wherein a KL distance for a frame is a KL distance between a first subset and a second subset of the similarity set of the frame, the first subset corresponds to the similarity between the frame and the frame in the first predetermined time period immediately before the frame, and the second subset corresponds to the similarity between the frame and the frame in the second predetermined time period immediately after the frame,

the second condition is that, a difference between a a ratio of slopes of the first subset and the second subset of the frame and a ratio of slopes of the first subset and the second subset of the previous frame is greater than or equal to a second predetermined threshold,

the third condition is that, a value obtained by a difference between an average of the first subset of the previous frame and an average of the second subset of the previous frame minus a difference between an average of the first subset of the frame and an average of the second subset of the frame is greater than or equal to a third predetermined threshold, or

the fourth condition is that, a curve corresponding to the average of the first subset drops, a curve corresponding to the average of the second subset rises, and the difference between the average of the first subset and the average of the second subset is less than or equal to a fourth predetermined threshold.

9. The information processing method (500) according to claim 8, where for each tracklet, the splitting point is determined only from a splitting point determination start frame to a splitting point determination end frame in the specific frame set; and

the splitting point determination start frame is a frame for which a dropping degree of the second subset is greater than or equal to a fifth predetermined threshold, and the splitting point determination end frame is a frame for which an increasing degree of the first subset is greater than or equal to a sixth predetermined threshold.

10. The information processing method (500) according to claim 9, where the splitting point determination start frame satisfies moreover the condition that a difference between a first element and a second element in a similarity set of the splitting point determination start frame is greater than or equal to a seventh predetermined threshold, where the first element corresponds to a frame before the splitting point determination start frame, a time interval between which and the splitting point determination start frame being less than or equal to a third predetermined time period, and the second element corresponds to a frame after the splitting point determination start frame, a time interval between which and the splitting point determination start frame being greater than or equal to a fourth predetermined time period.

11. A computer readable storage medium storing instructions, wherein the instructions, when being executed by a computer, cause the computer to perform the information processing method according to any one of claims 8 to 10.

**Patentansprüche**

1. Informationsverarbeitungsvorrichtung (100), umfassend:

eine Berechnungseinheit für ein Ähnlichkeitsmaß (102), die so konfiguriert ist, dass sie für jedes Tracklet einer Vielzahl von Tracklets eine Ähnlichkeitsmenge jedes Einzelbilds einer spezifischen Einzelbildmenge, die in dem Tracklet enthalten ist, berechnet, wobei die Ähnlichkeitsmenge eine Ähnlichkeit zwischen dem Einzelbild und einem Einzelbild in einem ersten vorbestimmten Zeitintervall unmittelbar vor dem Einzelbild und eine Ähnlichkeit zwischen dem Einzelbild und einem Einzelbild in einem zweiten vorbestimmten Zeitintervall unmittelbar nach dem Einzelbild einschließt;

eine Trennpunktbestimmungseinheit (104), die so konfiguriert ist, dass sie für jedes Tracklet der Vielzahl von Tracklets einen Trennpunkt des Tracklets aus der spezifischen Einzelbildmenge basierend auf der von der Berechnungseinheit für ein Ähnlichkeitsmaß (102) berechneten Ähnlichkeitsmenge bestimmt, wobei der Trennpunkt eine Änderung eines am Tracklet beteiligten Objekts anzeigt;

eine Aufteileinheit (106), die so konfiguriert ist, dass sie ein entsprechendes Tracklet unter Verwendung des durch die Trennpunktbestimmungseinheit bestimmten Trennpunkts in eine Vielzahl von Untersegmenten aufteilt; und

eine Zusammenführungseinheit (108), die so konfiguriert ist, dass sie Untersegmente, die dasselbe Objekt betreffen und sich unter den zusammenzuführenden Untersegmenten zeitlich nicht überlappen, zusammenführt, um ein zusammengeführtes Segment zu erhalten, wobei die zusammenzuführenden Untersegmente die durch die Aufteileinheit erhaltene Vielzahl von Untersegmenten einschließen,

**dadurch gekennzeichnet, dass**,

die Trennpunktbestimmungseinheit (104) ein Einzelbild als Trennpunkt eines das Einzelbild einschließenden Tracklets bestimmt, falls das Einzelbild mindestens eine von einer Bedingung, einer zweiten Bedingung, einer dritten Bedingung und einer vierten Bedingung erfüllt,

wobei die erste Bedingung darin besteht, dass eine Differenz zwischen einer KL-Divergenz für das Einzelbild und einer KL-Divergenz für das vorhergehende Einzelbild größer oder gleich einem ersten vorbestimmten Schwellenwert ist, wobei eine KL-Divergenz für ein Einzelbild eine KL-Divergenz zwischen einer ersten Teilmenge und einer zweiten Teilmenge der Ähnlichkeitsmenge des Einzelbilds ist, wobei die erste Teilmenge der Ähnlichkeit zwischen dem Einzelbild und dem Einzelbild in einem ersten vorbestimmten Zeitintervall unmittelbar vor dem Einzelbild entspricht und die zweite Teilmenge der Ähnlichkeit zwischen dem Einzelbild und dem Einzelbild in einem zweiten vorbestimmten Zeitintervall unmittelbar nach dem Einzelbild entspricht,

wobei die zweite Bedingung darin besteht, dass eine Differenz zwischen einem Verhältnis der Steigungen der ersten Teilmenge und der zweiten Teilmenge für das Einzelbild und einem Verhältnis der Steigungen der ersten Teilmenge und der zweiten Teilmenge für das vorhergehende Einzelbild größer oder gleich einem zweiten vorbestimmten Schwellenwert ist,

wobei die dritte Bedingung darin besteht, dass ein Wert, der durch eine Differenz zwischen einem Mittelwert der ersten Teilmenge des vorhergehenden Einzelbilds und einem Mittelwert der zweiten Teilmenge des vorhergehenden Einzelbilds abzüglich einer Differenz zwischen einem Mittelwert der ersten Teilmenge des Einzelbilds und einem Mittelwert der zweiten Teilmenge des Einzelbilds erhalten wird, größer oder gleich einem dritten vorbestimmten Schwellenwert ist, oder

wobei die vierte Bedingung darin besteht, dass eine dem Mittelwert der ersten Teilmenge entsprechende Kurve abfällt, eine dem Mittelwert der zweiten Teilmenge entsprechende Kurve ansteigt und die Differenz zwischen dem Mittelwert der ersten Teilmenge und dem Mittelwert der zweiten Teilmenge kleiner oder gleich einem vierten vorbestimmten Schwellenwert ist.

2. Informationsverarbeitungsvorrichtung (100) nach Anspruch 1, wobei für jedes Tracklet der Trennpunkt ausschließlich innerhalb der spezifischen Einzelbildmenge von einem Start-Einzelbild der Trennpunktbestimmung bis zu einem End-Einzelbild der Trennpunktbestimmung bestimmt wird; und

wobei das Start-Einzelbild der Trennpunktbestimmung ein Einzelbild ist, für das ein Abfallgrad der zweiten Teilmenge größer oder gleich einem fünften vorbestimmten Schwellenwert ist, und das End-Einzelbild der Trennpunktbestimmung ein Einzelbild ist, für das ein Anstiegsgrad der ersten Teilmenge größer oder gleich einem sechsten vorbestimmten Schwellenwert ist.

3. Informationsverarbeitungsvorrichtung (100) nach Anspruch 2, wobei das Start-Einzelbild der Trennpunktbestimmung zudem die Bedingung erfüllt, dass eine Differenz zwischen einem ersten Element und einem zweiten Element in einer Ähnlichkeitsmenge des Start-Einzelbilds der Trennpunktbestimmung größer oder gleich einem siebten vorbestimmten Schwellenwert ist, wobei das erste Element einem Einzelbild vor dem Start-Einzelbild der Trennpunktbestimmung entspricht, wobei ein Zeitintervall zwischen diesem und dem Start-Einzelbild der Trennpunktbestimmung kleiner oder gleich einem dritten vorbestimmten Zeitintervall ist, und das zweite Element einem Einzelbild nach dem Start-Einzelbild der Trennpunktbestimmung entspricht, wobei ein Zeitintervall zwischen diesem und dem Start-Einzelbild der Trennpunktbestimmung größer oder gleich einem vierten vorbestimmten Zeitintervall ist.

4. Informationsverarbeitungsvorrichtung (100) nach Anspruch 2, wobei für jedes Tracklet die spezifische Einzelbildmenge nur Einzelbilder einschließt, die eine Bedingung erfüllen, dass eine erste Schnittmenge über Vereinigung (Intersection over Union) zwischen einem Begrenzungsrechteck des Zielobjekts und einem Begrenzungsrechteck eines anderen Objekts in jedem Einzelbild der spezifischen Einzelbildmenge größer oder gleich einem achten vorbestimmten Schwellenwert ist.

5. Informationsverarbeitungsvorrichtung (100) nach Anspruch 4, wobei die Berechnungseinheit für ein Ähnlichkeitsmaß (102) so konfiguriert ist, dass sie: für jedes Einzelbild der spezifischen Einzelbildmenge als Ähnlichkeitsmenge nur Ähnlichkeiten zwischen dem Einzelbild und einer Vielzahl von Einzelbildern in einem ersten vorbestimmten Zeitintervall unmittelbar vor dem Einzelbild und in einem zweiten vorbestimmten Zeitintervall unmittelbar nach dem Einzelbild berechnet, die eine Bedingung erfüllen, dass eine zweite Schnittmenge über Vereinigung zwischen einem Begrenzungsrechteck des Zielobjekts und einem Begrenzungsrechteck eines beliebigen anderen Objekts in jedem Einzelbild der Vielzahl von Einzelbildern kleiner oder gleich einem neunten vorbestimmten Schwellenwert ist, und wobei der neunte vorbestimmte Schwellenwert größer ist als der achte vorbestimmte Schwellenwert.

6. Informationsverarbeitungsvorrichtung (100) nach Anspruch 5, wobei die Trennpunktbestimmungseinheit (104) weiter so konfiguriert ist, dass sie den Trennpunkt weiter basierend auf einer Differenz zwischen einer realen Position und einer geschätzten Position eines Zielobjekts in jedem Einzelbild der spezifischen Einzelbildmenge bestimmt, und wobei die geschätzte Position basierend auf realen Positionen des Zielobjekts in Einzelbildern in einem ersten Zeitraum vor dem Einzelbild und realen Positionen des Zielobjekts in Einzelbildern in einem zweiten Zeitraum nach dem Einzelbild erhalten wird.

7. Informationsverarbeitungsvorrichtung (100) nach einem der Ansprüche 1 bis 6, wobei die Zusammenführungseinheit (108) so konfiguriert ist, dass sie basierend auf einer Ähnlichkeit zwischen repräsentativen Merkmalen der zusammenzuführenden Untersegmente bestimmt, ob die zusammenzuführenden Untersegmente dasselbe Objekt betreffen, und

   wobei ein repräsentatives Merkmal jedes zusammenzuführenden Untersegments ein Merkmal eines Einzelbilds in dem zusammenzuführenden Untersegment ist, wobei eine Ähnlichkeit zwischen dem Merkmal des Einzelbilds und einem Mittelwert von Merkmalen vorhergehender Einzelbilder in dem zusammenzuführenden Untersegment kleiner oder gleich einem vorbestimmten Wert ist.

8. Computerimplementiertes Informationsverarbeitungsverfahren (500), umfassend:

   Berechnen (S502) einer Ähnlichkeitsmenge für jedes Einzelbild einer spezifischen, in dem Tracklet enthaltenen Einzelbildmenge für jedes Tracklet einer Vielzahl von Tracklets, wobei die Ähnlichkeitsmenge eine Ähnlichkeit zwischen dem Einzelbild und einem Einzelbild in einem ersten vorbestimmten Zeitintervall unmittelbar vor dem Einzelbild und eine Ähnlichkeit zwischen dem Einzelbild und einem Einzelbild in einem zweiten vorbestimmten Zeitintervall unmittelbar nach dem Einzelbild einschließt;
   Bestimmen (S504), für jedes Tracklet der Vielzahl von Tracklets, eines Trennpunkts des Tracklets aus der spezifischen Einzelbildmenge basierend auf der Ähnlichkeitsmenge, wobei der Trennpunkt eine Änderung eines am Tracklet beteiligten Objekts anzeigt;
   Aufteilen (S506) eines entsprechenden Tracklets unter Verwendung des bestimmten Trennpunkts in eine Vielzahl von Untersegmenten; und
   Zusammenführen (S508) von Untersegmenten, die dasselbe Objekt betreffen und sich unter den zusammenzuführenden Untersegmenten zeitlich nicht überlappen, um ein zusammengeführtes Segment zu erhalten, wobei die zusammenzuführenden Untersegmente die Vielzahl von Untersegmenten einschließen,
   **dadurch gekennzeichnet, dass**,
   ein Einzelbild als Trennpunkt eines das Einzelbild einschließenden Tracklets bestimmt wird, falls das Einzelbild mindestens eine von einer Bedingung, einer zweiten Bedingung, einer dritten Bedingung und einer vierten Bedingung erfüllt,
   wobei die erste Bedingung darin besteht, dass eine Differenz zwischen einer KL-Divergenz für das Einzelbild und einer KL-Divergenz für das vorhergehende Einzelbild größer oder gleich einem ersten vorbestimmten Schwellenwert ist, wobei eine KL-Divergenz für ein Einzelbild eine KL-Divergenz zwischen einer ersten Teilmenge und einer zweiten Teilmenge der Ähnlichkeitsmenge des Einzelbilds ist, wobei die erste Teilmenge der Ähnlichkeit zwischen dem Einzelbild und dem Einzelbild in einem ersten vorbestimmten Zeitintervall unmittelbar vor dem Einzelbild entspricht und die zweite Teilmenge der Ähnlichkeit zwischen dem Einzelbild und dem Einzelbild in einem zweiten vorbestimmten Zeitintervall unmittelbar nach dem Einzelbild entspricht,
   wobei die zweite Bedingung darin besteht, dass eine Differenz zwischen einem Verhältnis der Steigungen der ersten Teilmenge und der zweiten Teilmenge für das Einzelbild und einem Verhältnis der Steigungen der ersten Teilmenge und der zweiten Teilmenge für das vorhergehende Einzelbild größer oder gleich einem zweiten vorbestimmten Schwellenwert ist,
   wobei die dritte Bedingung darin besteht, dass ein Wert, der durch eine Differenz zwischen einem Mittelwert der ersten Teilmenge des vorhergehenden Einzelbilds und einem Mittelwert der zweiten Teilmenge des vorhergehenden Einzelbilds abzüglich einer Differenz zwischen einem Mittelwert der ersten Teilmenge des Einzelbilds und einem Mittelwert der zweiten Teilmenge des Einzelbilds erhalten wird, größer oder gleich einem dritten vorbestimmten Schwellenwert ist, oder
   wobei die vierte Bedingung darin besteht, dass eine dem Mittelwert der ersten Teilmenge entsprechende Kurve abfällt, eine dem Mittelwert der zweiten Teilmenge entsprechende Kurve ansteigt und die Differenz zwischen dem Mittelwert der ersten Teilmenge und dem Mittelwert der zweiten Teilmenge kleiner oder gleich einem vierten vorbestimmten Schwellenwert ist.

9. Informationsverarbeitungsverfahren (500) nach Anspruch 8, wobei für jedes Tracklet der Trennpunkt ausschließlich innerhalb der spezifischen Einzelbildmenge von einem Start-Einzelbild der Trennpunktbestimmung bis zu einem End-Einzelbild der Trennpunktbestimmung bestimmt wird; und

wobei das Start-Einzelbild der Trennpunktbestimmung ein Einzelbild ist, für das ein Abfallgrad der zweiten Teilmenge größer oder gleich einem fünften vorbestimmten Schwellenwert ist, und das End-Einzelbild der Trennpunktbestimmung ein Einzelbild ist, für das ein Anstiegsgrad der ersten Teilmenge größer oder gleich einem sechsten vorbestimmten Schwellenwert ist.

10. Informationsverarbeitungsverfahren (500) nach Anspruch 9, wobei das Start-Einzelbild der Trennpunktbestimmung zudem die Bedingung erfüllt, dass eine Differenz zwischen einem ersten Element und einem zweiten Element in einer Ähnlichkeitsmenge des Start-Einzelbilds der Trennpunktbestimmung größer oder gleich einem siebten vorbestimmten Schwellenwert ist, wobei das erste Element einem Einzelbild vor dem Start-Einzelbild der Trennpunktbestimmung entspricht, wobei ein Zeitintervall zwischen diesem und dem Start-Einzelbild der Trennpunktbestimmung kleiner oder gleich einem dritten vorbestimmten Zeitintervall ist, und das zweite Element einem Einzelbild nach dem Start-Einzelbild der Trennpunktbestimmung entspricht, wobei ein Zeitintervall zwischen diesem und dem Start-Einzelbild der Trennpunktbestimmung größer oder gleich einem vierten vorbestimmten Zeitintervall ist.

11. Computerlesbares Speichermedium, das Anweisungen speichert, wobei die Anweisungen, wenn sie von einem Computer ausgeführt werden, den Computer veranlassen, das Informationsverarbeitungsverfahren nach einem der Ansprüche 8 bis 10 auszuführen.

**Revendications**

1. Dispositif (100) de traitement d'informations, comprenant :

une unité (102) de calcul de similarité, configurée pour calculer, pour chaque tracklet d'une pluralité de tracklets, un ensemble de similarité de chaque trame d'un ensemble spécifique de trames inclus dans le tracklet, dans laquelle l'ensemble de similarité inclut une similarité entre la trame et une trame dans une première période de temps prédéterminée immédiatement avant la trame et une similarité entre la trame et une trame dans une deuxième période de temps prédéterminée immédiatement après la trame ;
une unité (104) de détermination de point de division, configurée pour déterminer, pour chaque tracklet de la pluralité de tracklets, un point de division du tracklet à partir de l'ensemble spécifique de trames sur la base de l'ensemble de similarité calculé par l'unité (102) de calcul de similarité, dans laquelle le point de division indique un changement d'un objet impliqué dans le tracklet ;
une unité (106) de division, configurée pour diviser un tracklet correspondant en une pluralité de sous-segments en utilisant le point de division déterminé par l'unité de détermination de point de division ; et
une unité (108) de fusion, configurée pour fusionner des sous-segments qui concernent un même objet et ne se chevauchent pas temporellement parmi des sous-segments à fusionner, afin d'obtenir un segment fusionné, dans laquelle les sous-segments à fusionner incluent la pluralité de sous-segments obtenus par l'unité de division,
**caractérisé en ce que**,
l'unité (104) de détermination de point de division détermine une trame comme point de division d'un tracklet incluant la trame dans le cas où la trame satisfait au moins l'une des première, deuxième, troisième et quatrième conditions,
la première condition étant qu'une différence entre une distance KL pour la trame et une distance KL pour la trame précédente est supérieure ou égale à un premier seuil prédéterminé, dans laquelle la distance KL pour une trame est une distance KL entre un premier sous-ensemble et un deuxième sous-ensemble de l'ensemble de similarité de la trame, le premier sous-ensemble correspond à la similarité entre la trame et la trame dans la première période de temps prédéterminée immédiatement avant la trame, et le deuxième sous-ensemble correspond à la similarité entre la trame et la trame dans la deuxième période de temps prédéterminée immédiatement après la trame,
la deuxième condition étant qu'une différence entre un rapport des pentes du premier sous-ensemble et du deuxième sous-ensemble de la trame et un rapport des pentes du premier sous-ensemble et du deuxième sous-ensemble de la trame précédente est supérieure ou égale à un deuxième seuil prédéterminé,
la troisième condition étant qu'une valeur obtenue par une différence entre une moyenne du premier sous-ensemble de la trame précédente et une moyenne du deuxième sous-ensemble de la trame précédente, diminuée d'une différence entre une moyenne du premier sous-ensemble de la trame et une moyenne du deuxième sous-ensemble de la trame, est supérieure ou égale à un troisième seuil prédéterminé, ou
la quatrième condition étant qu'une courbe correspondant à la moyenne du premier sous-ensemble décroît, qu'une courbe correspondant à la moyenne du deuxième sous-ensemble croît, et que la différence entre la moyenne du premier sous-ensemble et la moyenne du deuxième sous-ensemble est inférieure ou égale à un quatrième seuil prédéterminé.

2. Dispositif (100) de traitement d'informations selon la revendication 1, dans lequel, pour chaque tracklet, le point de division est déterminé uniquement d'une trame de début de détermination du point de division à une trame de fin de détermination du point de division dans l'ensemble spécifique de trames ; et

la trame de début de détermination du point de division est une trame pour laquelle un degré de décroissance du deuxième sous-ensemble est supérieur ou égal à un cinquième seuil prédéterminé, et la trame de fin de détermination du point de division est une trame pour laquelle un degré de croissance du premier sous-ensemble est supérieur ou égal à un sixième seuil prédéterminé.

3. Dispositif (100) de traitement d'informations selon la revendication 2, dans lequel la trame de début de détermination du point de division satisfait en outre la condition selon laquelle une différence entre un premier élément et un deuxième élément dans un ensemble de similarité de la trame de début de détermination du point de division est supérieure ou égale à un septième seuil prédéterminé, dans lequel le premier élément correspond à une trame avant la trame de début de détermination du point de division, un intervalle de temps entre celle-ci et la trame de début de détermination du point de division étant inférieur ou égal à une troisième période de temps prédéterminée, et le deuxième élément correspond à une trame après la trame de début de détermination du point de division, un intervalle de temps entre celle-ci et la trame de début de détermination du point de division étant supérieur ou égal à une quatrième période de temps prédéterminée.

4. Dispositif (100) de traitement d'informations selon la revendication 2, dans lequel, pour chaque tracklet, l'ensemble spécifique de trames inclut uniquement des trames qui satisfont une condition selon laquelle une première intersection sur union (IoU) entre une boîte englobante d'une cible et une boîte englobante d'un autre objet dans chaque trame de l'ensemble spécifique de trames est supérieure ou égale un huitième seuil prédéterminé.

5. Dispositif (100) de traitement d'informations selon la revendication 4, dans lequel l'unité (102) de calcul de similarité est configurée pour : pour chaque trame de l'ensemble spécifique de trames, calculer, en tant qu'ensemble de similarité, uniquement des similarités entre la trame et une pluralité de trames dans la première période de temps prédéterminée immédiatement avant la trame et dans la deuxième période de temps prédéterminée immédiatement après la trame, qui satisfont une condition selon laquelle une deuxième intersection sur union (IoU) entre une boîte englobante d'une cible et une boîte englobante de tout autre objet dans chacune des trames de ladite pluralité est inférieure ou égale à un neuvième seuil prédéterminé, et

dans lequel le neuvième seuil prédéterminé est supérieur au huitième seuil prédéterminé.

6. Dispositif (100) de traitement d'informations selon la revendication 5, dans lequel l'unité (104) de détermination de point de division est en outre configurée pour déterminer le point de division sur la base d'une différence entre une position réelle et une position estimée d'un objet cible dans chaque trame de l'ensemble spécifique de trames, et dans lequel la position estimée est obtenue sur la base des positions réelles de l'objet cible dans des trames d'un premier intervalle de temps avant la trame et dans des trames d'un deuxième intervalle de temps après la trame.

7. Dispositif (100) de traitement d'informations selon l'une quelconque des revendications 1 à 6, dans lequel l'unité (108) de fusion est configurée pour déterminer si des sous-segments à fusionner concernent un même objet sur la base d'une similarité entre des caractéristiques représentatives des sous-segments à fusionner, et

dans lequel une caractéristique représentative de chaque sous-segment à fusionner est une caractéristique d'une trame dans le sous-segment à fusionner, une similarité entre la caractéristique de la trame et une moyenne de caractéristiques de trames précédentes dans le sous-segment à fusionner étant inférieure ou égale à une valeur prédéterminée.

8. Procédé (500) de traitement d'informations mis en œuvre par ordinateur, comprenant :

le calcul (S502), pour chacun d'une pluralité de tracklets, d'un ensemble de similarité de chaque trame d'un ensemble spécifique de trames inclus dans le tracklet, dans lequel l'ensemble de similarité incluant une similarité entre la trame et une trame dans une première période de temps prédéterminée immédiatement avant la trame et une similarité entre la trame et une trame dans une deuxième période de temps prédéterminée immédiatement après la trame ;

la détermination (S504), pour chacun de la pluralité de tracklets, d'un point de division du tracklet à partir de l'ensemble spécifique de trames sur la base de l'ensemble de similarité, dans laquelle le point de division indique un changement d'un objet impliqué dans le tracklet ;

la division (S506) d'un tracklet correspondant en une pluralité de sous-segments en utilisant le point de division déterminé ; et

la fusion (S508) des sous-segments qui concernent un même objet et ne se chevauchent pas temporellement parmi des sous-segments à fusionner, afin d'obtenir un segment fusionné, dans laquelle les sous-segments à fusionner incluent la pluralité de sous-segments,

**caractérisé en ce que**

une trame est déterminée comme point de division d'un tracklet incluant la trame dans le cas où la trame satisfait au moins l'une des première, deuxième, troisième et quatrième conditions,

la première condition étant qu'une différence entre une distance KL pour la trame et une distance KL pour la trame précédente est supérieure ou égale à un premier seuil prédéterminé, dans laquelle la distance KL pour une trame est une distance KL entre un premier sous-ensemble et un deuxième sous-ensemble de l'ensemble de similarité de la trame, le premier sous-ensemble correspond à la similarité entre la trame et la trame dans la première période de temps prédéterminée immédiatement avant la trame, et le deuxième sous-ensemble correspond à la similarité entre la trame et la trame dans la deuxième période de temps prédéterminée immédiatement après la trame,

la deuxième condition étant qu'une différence entre un rapport des pentes du premier sous-ensemble et du deuxième sous-ensemble de la trame et un rapport des pentes du premier sous-ensemble et du deuxième sous-ensemble de la trame précédente est supérieure ou égale à un deuxième seuil prédéterminé,

la troisième condition étant qu'une valeur obtenue par une différence entre une moyenne du premier sous-ensemble de la trame précédente et une moyenne du deuxième sous-ensemble de la trame précédente, diminuée d'une différence entre une moyenne du premier sous-ensemble de la trame et une moyenne du deuxième sous-ensemble de la trame, est supérieure ou égale à un troisième seuil prédéterminé, ou

la quatrième condition étant qu'une courbe correspondant à la moyenne du premier sous-ensemble décroît, qu'une courbe correspondant à la moyenne du deuxième sous-ensemble croît, et que la différence entre la moyenne du premier sous-ensemble et la moyenne du deuxième sous-ensemble est inférieure ou égale à un quatrième seuil prédéterminé.

9. Procédé (500) de traitement d'informations selon la revendication 8, où pour chaque tracklet, le point de division est déterminé uniquement d'une trame de début de détermination du point de division à une trame de fin de détermination du point de division dans l'ensemble spécifique de trames ; et la trame de début de détermination du point de division est une trame pour laquelle un degré de décroissance du deuxième sous-ensemble est supérieur ou égal à un cinquième seuil prédéterminé, et la trame de fin de détermination du point de division est une trame pour laquelle un degré de croissance du premier sous-ensemble est supérieur ou égal à un sixième seuil prédéterminé.

10. Procédé (500) de traitement d'informations selon la revendication 9, où la trame de début de détermination du point de division satisfait en outre la condition selon laquelle une différence entre un premier élément et un deuxième élément dans un ensemble de similarité de la trame de début de détermination du point de division est supérieure ou égale à un septième seuil prédéterminé, où le premier élément correspond à une trame avant la trame de début de détermination du point de division, un intervalle de temps entre celle-ci et la trame de début de détermination du point de division étant inférieur ou égal à une troisième période de temps prédéterminée, et le deuxième élément correspond à une trame après la trame de début de détermination du point de division, un intervalle de temps entre celle-ci et la trame de début de détermination du point de division étant supérieur ou égal à une quatrième période de temps prédéterminée.

11. Support de stockage lisible par ordinateur stockant des instructions, dans lequel les instructions, lorsqu'elles sont mises en œuvre par un ordinateur, amènent l'ordinateur à réaliser le procédé de traitement d'informations selon l'une quelconque des revendications 8 à 10.

100

| Similarity calculating unit 102 |
| Splitting point determining unit 104 |
| Splitting unit 106 |
| Merging unit 108 |

Figure 1

Figure 2

Figure 3

| Technology | DA1 | DA2 | DA3 | DA4 | DA5 | DA6 | DA7 | DA8 |
|---|---|---|---|---|---|---|---|---|
| ByteTrack | 77.9% | 70.8% | 62.6% | 39.9% | 75.0% | 44.7% | 37.6% | 52.1% |
| Information processing device 100 | **84.9%** | **79.4%** | **64.8%** | **82.8%** | **81.2%** | **83.8%** | **59.2%** | **82.8%** |

Figure 4

S501

```
┌─────────────┐
│    Start    │
└─────────────┘
```

Calculate, for each tracklet, similarity set of each frame of predetermined frame set included in the tracklet ⟍ S502

Determine, for each tracklet, splitting point of tracklet from predetermined frame set based on similarity set of tracket ⟍ S504

Split tracklet into multiple sub-segments based on the determined splitting point ⟍ S506

Merge sub-segments involving same object and not overlapping temporally among sub-segments to be merged S508

S509

```
┌─────────────┐
│     End     │
└─────────────┘
```

Figure 5

Figure 6

Figure 7

1000

1001  1002  1003

| CPU | | ROM | | RAM |

1004

1005

Input/output interface

| Input device | Output device | Storage device | Communicat-ion device | Driver |

1010

1006   1007   1008   1009

Removable medium

1011

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YANG FAN et al.** ReMOT: A model-agnostic refinement for multiple object tracking. *IMAGE AND VISION COMPUTING*, 01 February 2021, vol. 106, ISSN 0262-8856, 104091